# EUROPEAN PATENT APPLICATION

(11) **EP 4 714 796 A1**
(43) Date of publication of application: **25.03.2026**
(21) Application number: 24201025.4
(22) Date of filing: 18.09.2024
(51) Int. Cl.: B62D 27/02, B62D 25/02, B62D 27/06, B60K 1/04, B62D 29/00

(54) **STRUCTURAL COMPONENT AND MANUFACTURING METHOD THEREOF**

(71) Applicant: Constellium Singen GmbH, 78224 Singen (DE); Constellium UK Limited, Burnham, Buckinghamshire SL1 8DF (GB)
(72) Inventor: SCHAEFER, Simon, 78224 SINGEN (DE); EDEN, James, ROYAL LEAMINGTON Spa, CV31 2RU (GB); HAMMOND, William, HAYWARDS HEATH, RH16 4ZW (GB); BEN TAHAR, Mehdi, 38000 GRENOBLE (FR); SCHWARZ, Kai, 78244 GOTTMADINGEN (DE); LANGE, Christian, 8224 LOHNINGEN (CH); BUEHNER, Alexander, 78247 HILZINGEN (DE)
(74) Representative: Constellium - Propriété Industrielle

(57) **Abstract**

The invention concerns a manufacturing method for producing a structural component (1) for a vehicle, comprising a providing step (E1) in which a first profile (10) and at least one second profile (20) are provided ; an assembly step (E2) in which the first profile (10) and the second profile (20) are arranged in an assembly configuration (AC) wherein the first profile (10) and the second profile (20) are movable relative to each other according to at least one degree of freedom; and a fixing step (E3) in which a fixing element (30) secure the first profile (10) with the second profile (20) by removing said degree of freedom.

The invention also concerns a structural component (1), and a sill or a battery holder comprising such structural component (1).

## Description

### TECHNICAL FIELD OF THE INVENTION

This invention relates to the field of structural component for battery vehicle.

More precisely, this invention relates to sill and/or battery holder that may be used in the field of electric or hybrid motorized transport vehicle.

### BACKGROUND

In the field of motorized vehicle, the technical performance of structural components is increasingly demanding. Structural elements have to support increasingly heavy loads, without overloading the vehicle's weight.

Indeed, the electrification of the automotive industry is steering the vehicle weights to a significant increase owing to the use of battery cells. Doing so, the crash protection in side impact instances is no longer designed to protect the passenger only but also the battery cells from serious damage and therefore from thermal runaway.

Both side sill and the side member of the battery enclosure act as protective elements. Depending on the type of vehicle, the level of crash protection can be either managed by a complex, extrusion-based side sill combined with fairly lean side battery member or managed by a lean side sill combined with a complex extrusion-based side battery member or a split in the shape complexity between the side sill and the side battery.

Similarly, other complex and long structural components may be used in a motorized vehicle like for example transversal element that contribute to the vehicle integrity.

Those scenarios make the manufacture of such protective elements expensive and complicated, since the dimensional and geometrical tolerances of complex elements over a long length are very tight and require calibration operations (i.e. hydroforming, stretching, mechanical expansion).

Therefore, there is a need for a low-cost, easy-to-implement method of manufacturing long, and complex structural components.

### SUMMARY OF THE INVENTION

The present invention aims at solving the aforementioned problems. To this end, the invention concerns a manufacturing method for producing a structural component for a vehicle, the manufacturing method comprising:
- a providing step in which a first profile and at least one second profile are provided, the first profile extending along a longitudinal direction and delimiting internally at least two first longitudinal cavities extending along all or part of said first profile, the second profile delimiting internally at least two second longitudinal cavities extending along all or part of said second profile;
- an assembly step in which the first profile and the second profile are arranged relative to one another along the longitudinal direction in an assembly configuration wherein the first profile and the second profile are movable relative to each other according to at least one degree of freedom;
- a fixing step in which a fixing element secure the first profile with the second profile by removing said at least one degree of freedom, the first profile being fixedly attached to the second profile at the end of the fixing step, thus forming the structural component.

The arrangements described above allows proposing a manufacturing method to produce a structural component for vehicle, and for example a structural component for battery holder or for a sill by using at least two different profiles. It allows to manufacture complex structural component while providing simpler profile, and to manage dimensional and geometrical tolerances during assembly step.

According to an embodiment, the manufacturing method comprises one or more of the following features, taken alone or in combination.

According to one embodiment, the first profile and the second profile are adjusted relative to one another along the longitudinal direction during the assembly step.

Generally, the cross section of the first profile is counted perpendicular to the longitudinal direction.

According to one embodiment, the cross section of the first profile is constant along the longitudinal direction of the first profile.

According to one embodiment, at least one of the first profile or of the second profile is an extruded profile along the longitudinal direction. The extrusion direction of the first profile or of the second profile is parallel or confound to the longitudinal direction.

According to one embodiment, the at least one first profile and the at least one second profile are extruded profiles along the longitudinal direction. The extrusion direction of the first profile and of the second profile is parallel or confound to the longitudinal direction.

In the embodiments where the first profile and/or the second profile are extruded profiles, not only does the invention have the advantage of making it possible to manufacture complex structural components while providing a simpler extruded profile, and to manage dimensional and geometric tolerances during the assembly stage, but it also reduces the size of the tools used to extrude the profiles used to manufacture the structural component.

Generally, the cross section of the second profile is counted perpendicular to the longitudinal direction.

According to one embodiment, the first profile presents a first length counted along the longitudinal direction which is superior to 1.0 m, preferably superior to 1.5 m.

According to one embodiment, the cross section of the second profile is constant along the longitudinal direction of the second profile.

According to one embodiment, the cross section of the second profile is discontinued along the longitudinal direction of the length of the first profile. In such embodiment the second profile is for example made from several profiles having the same cross section and different or same lengths, said length being smaller than the first length of the first profile.

According to one embodiment, the structural component formed by the first profile fixedly attached to the second profile, presents a cross section circumscribed in a circle and a length counted along the longitudinal direction, a ratio of said length over a diameter of said circle being comprised between 3 and 20, preferably between 3 and 15.

Generally, the ratio of the length over the diameter of the circle is calculated with the cross section which is constant along the longitudinal direction of the first profile.

According to one embodiment, the first profile comprises a first junction surface, and the second profile comprises a second junction surface, the assembly step consists in arranging the first profile and the second profile relative to one other, with the first joining surface and the second joining surface facing each other, and the fixing element comprises an adhesive agent disposed between the first junction surface and the second junction surface during the fixing step.

According to one embodiment, the fixing element is disposed at the boundary of the first and the second junction surfaces and/or between and/or across the first and the second junction surface, to secure the first profile with the second profile during the fixing step.

In this way, it is possible to manage dimensional and geometrical tolerances during assembly step while the fixing element is disposed at the two junction surfaces of the first profile and of the second profile.

According to one embodiment, the fixing element is a structural joining method to secure the first profile with the second profile. The fixing element is for example a welding seam, a mechanical fastener.

According to one embodiment, the fixing element comprises an adhesive agent disposed between the first junction surface and the second junction surface during the fixing step.

According to one embodiment the fixing element comprises an adhesive agent combined with welding or another mechanical fastener.

Thus, it is possible to maximize the surface of junction between the first profile and the second profile. Thus, the attachment between the first profile and the second profile is improved.

According to one embodiment, the first junction surface and the second junction surface define between them, in the assembly configuration, a reservoir intended to receive an excess of adhesive agent.

Thus, it is possible to manage the excess of adhesive and eliminate the squeeze-out of the adhesive agent when the first profile and the second profile are assembled.

According to one embodiment, the first profile provided in the providing step is formed in a first material having a first yield strength value, and the second profile provided in the providing step is formed in a second material distinct from the first material. Particularly, the second yield strength value being strictly inferior than the second yield strength value.

According to one embodiment, the first profile comprises two flanges protruding outwardly and defining between them a housing, the assembly step comprising the insertion of an insertion portion of the second profile inside the housing, one of the at least one degree of freedom being a translation of the second profile relative to the first profile along a transversal direction defined sensibly perpendicular to the longitudinal direction.

Generally, the insertion portion is smaller than the housing. It allows to create several degrees of freedom in translations and rotations of the second profile relative to the first profile. In the scope of the invention a degree of freedom corresponds to the possibility of moving the second profile relative to the first profile by translation or rotation along axes parallel to the longitudinal direction X, the transverse direction Y and/or the vertical direction Z.

In this way, it is possible to control the assembly of the first profile with the second profile, and to tune the position of the first profile with respect with the second profile by translations or rotations.

According to one embodiment, the first profile comprises a longitudinal hook extending along the longitudinal direction, and the second profile comprises a longitudinal groove extending along the longitudinal direction, the assembly step comprising the insertion of the longitudinal hook in the longitudinal groove, one of the at least one degree of freedom being a rotation of the first profile relative to the second profile around the longitudinal direction. According to this embodiment, a translation of the first profile relative to the second profile around the longitudinal direction may also be possible.

In this way, it is possible to control the assembly of the first profile with the second profile, and to tune the position of the first profile with respect with the second profile by rotation and translation if needed.

According to one embodiment, the first profile provided in the providing step is obtained by aluminum or aluminum alloy extrusion.

Thus, it is possible to provide profiles with reduced weight at a reduced cost.

According to one embodiment, the second profile provided in the providing step is obtained by aluminum or aluminum alloy extrusion.

The object of the invention may also be achieved by implementing a structural component for vehicle comprising a first profile and at least one second profile; the first profile and the second profile being arranged and fixedly attached to one another by a fixing element along the longitudinal direction, the structural component presenting a cross section circumscribed in a circle and a length counted along the longitudinal direction, a ratio of said length over a diameter of said circle being comprised between 3 and 20, preferably between 3 and 15.

The object of the invention may also be achieved by implementing a sill for vehicle, said sill comprising a structural component as described above. Such sill may be implemented in all part of the motorized vehicle where a structural component is useful (for example battery frame, side sills, transverse member, transversal beams).

The arrangements described above allows to provide a sill showing improved crash resistance capacity, fulfilling high dimensional and geometrical requirements, and being able to be produced with reduced cost.

The object of the invention may also be achieved by implementing a battery holder for electrically or partially electrically propelled vehicle, said battery holder comprising a floor and a frame encircling all or part of the floor and delimiting a housing intended to receive all or part of a battery to be supported by the battery holder, said frame comprising a structural component as described above.

The arrangements described above allows to provide a battery holder showing improved crash resistance capacity, fulfilling high dimensional and geometrical requirements, and being able to be produced with reduced cost.

According to an embodiment, the battery holder comprises on or more of the following features, taken alone or in combination.

According to one embodiment, the frame presents a closed shape encircling the floor, said closed shape is defined by a plurality of frame edges meeting two by two at their ends, the plurality of frame edges comprising at least two longitudinal edges shifted from each other in a lateral direction of the frame counted perpendicular to the direction of travel of the electrically or partially electrically propelled vehicle, said at least two longitudinal edges being constituted by the structural component.

Thus, the structural component protects the sides of the electrically or partially electrically propelled vehicle, which allows to protect the battery from exterior damages or crashes.

The object of the invention may also be achieved by implementing a vehicle comprising a battery, and a battery holder and/or a sill as described above.

The arrangements described above allows to provide an electrically or partially electrically propelled vehicle showing improved crash resistance capacity.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
Figure 1 represents a providing step of a manufacturing method according a first embodiment of the invention.
Figure 2 represents steps of the manufacturing method according to the embodiment of figure 1.
Figure 3 represents the structural component obtained by the manufacturing method of figure 1 and 2.
Figure 4 represents steps of the manufacturing method according a second embodiment of the invention.
Figure 5 represents a structural component obtained by a manufacturing method according to a third embodiment of the invention.
Figure 6 represents a structural component obtained by a manufacturing method according to a fourth embodiment of the invention.

### DETAILED DESCRIPTION

In the figures and in the remainder of the description, the same references represent identical or similar elements. In addition, the various elements are not represented to scale so as to favour the clarity of the figures. Furthermore, the different embodiments and variants are not mutually exclusive and can be combined with one another.

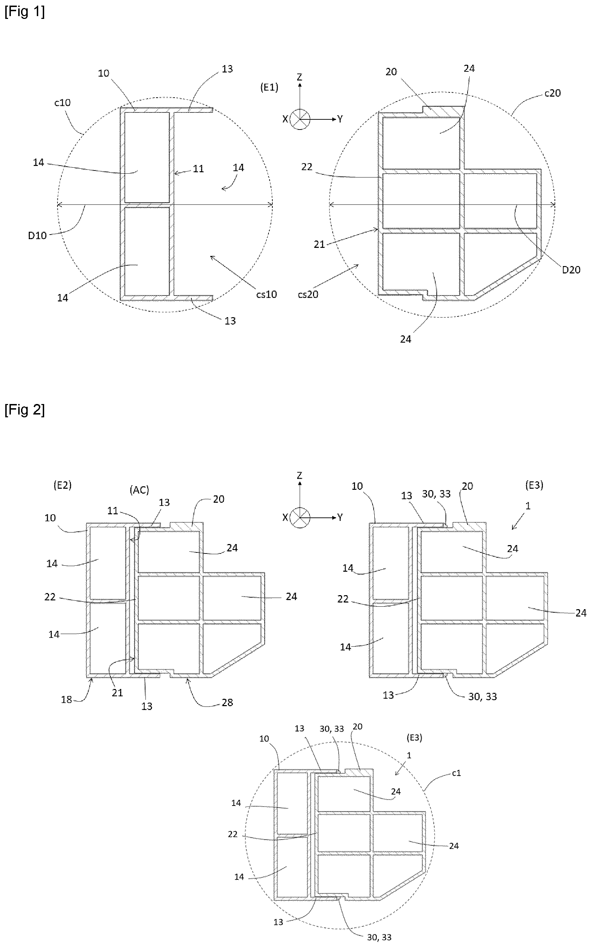

As illustrated on figures 1 to 6, the invention concerns a manufacturing method for producing a structural component 1 for a vehicle. More particularly, the manufacturing method may be used for producing structural component for electrical or hybrid vehicle, such as battery holders or sills. However, the manufacturing method is not limited to such component and can be used for any structural component 1 generally used in vehicles.

The manufacturing method first comprises a providing step E1 illustrated on figure 1. During this providing step E1, a first profile 10 and at least one second profile 20 are provided.

The first profile 10 is generally an extruded along a longitudinal direction noted "X", and presents a cross section cs10 circumscribed in a circle c10, and a first length 110 counted along the longitudinal direction X. Generally, the cross section cs10 of the first profile 10 is counted perpendicular to the longitudinal direction X. The first profile 10 delimits internally at least two first longitudinal cavities 14 extending along all or part of said first profile 10.

Generally, the cross section cs10 of the first profile 10 is constant along the longitudinal direction X of the first profile 10. The first length 110 is generally superior to 1.5 m.

The at least one second profile 20 may also be extruded along the longitudinal direction X. Besides, the second profile 20 may present a cross section cs20 for example counted perpendicular to the longitudinal direction X, which is circumscribed in a circle c20. The second profile 20 presents a second length l20 counted along the longitudinal direction X. The second profile 20 delimits internally at least two second longitudinal cavities 24 extending along all or part of said second profile 10.

In the same way as for the first profile 10, the cross section cs20 of the second profile 20 may be constant along the longitudinal direction X of the second profile 20, so that, the ratio of the second length l20 over the diameter D20 of the circle c20 is calculated with the cross section cs20 which is constant along the longitudinal direction X of the second profile 20.

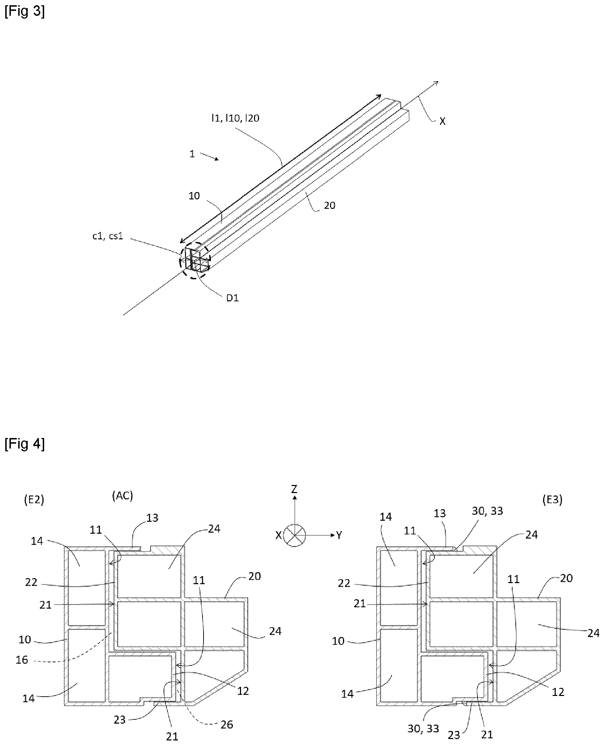

At the end of the manufacturing method, the obtained structural component 1 extends along the longitudinal direction X, and presents a cross section cs1 circumscribed in a circle c1, and a length l1 counted along the longitudinal direction X. Generally, the cross section cs1 of the structural component 1 is counted perpendicular to the longitudinal direction X. A ratio of said length l1 over a diameter D1 of said circle c1 may be comprise between 3 and 15. Figure 3 illustrates a variant wherein the first profile 10 and the second profile 20 have the same length l10, l20, and the resulting structural component 1 presents a length l1 equal to the first length l10 and to the second length l20.

According to one embodiment, the first profile 10 and/or the second profile 20 provided in the providing step E1 is/are obtained by aluminum or aluminum alloy extrusion. Thus, it is possible to provide profiles with reduced weight at a reduced cost.

According to one embodiment, the first profile 10 provided in the providing step E1 may be formed in a first material having a first yield strength value, and the second profile 20 provided in the providing step E1 may be formed in a second material distinct from the first material, and having a second yield strength value being strictly inferior than the second yield strength value.

The manufacturing method comprises further an assembly step E2 in which the first profile 10 and the second profile 20 are arranged relative to one another along the longitudinal direction X in an assembly configuration noted "AC". In this assembly configuration AC, the first profile 10 and the second profile 20 are movable relative to each other according to at least one degree of freedom. In other words, the first profile 10 and the second profile 20 are adjusted relative to one another along the longitudinal direction X, and or transversal direction Y and or vertical direction Z by rotation and/or translation during the assembly step E2.

As illustrated on figure 2, the assembly step E2 may be implemented by using a jig (not represented), which defines the final shape of the structural component 1. It is possible that the assembly step E2 is implemented by abutting a first functional surface 18 of the first profile 10 against the jig, and by abutting a second functional surface 28 of the second profile 20 against the jig. The at least one degree of freedom is then particularly important to manage the dimensional and geometrical tolerances between the first profile 10 and the second profile 20 along the longitudinal direction X.

As a result, the assembly step E2 helps to place the first profile 10 relative to the second profile 20, and the at least one degree of freedom helps to manage dimensional and geometrical variations that could occur by using long extruded profiles.

Finally, the manufacturing method comprises a fixing step E3 implemented after the assembly step E2. In fixing step E3, a fixing element 30 secures the first profile 10 with the second profile 20 by removing the degrees of freedom. As a result, the first profile 10 is fixedly attached to the second profile 20 at the end of the fixing step E3, thus forming the structural component 1.

At the end of the fixing step E3, the structural component 1 generally comprises a number of cavities 14, 24 which is equal to the sum of the number of first cavities 14, and the number of second cavities 24. The number of cavities 14, 24 in the structural component 1 is then superior or equal to 4. It is well understood that the manufacturing method allows to manufacture highly complex structural components 1 by using first and second profiles 10, 20 showing reduced complexity. The manufacturing costs are thus reduced and the obtained structural components 1 shows improved dimensional and geometrical characteristics. In the embodiments where the first profile and/or the second profile are extruded profiles, extrude simpler profiles reduces the size of the extrusion tools.

Different variant may be used and combined to secure the first profile 10 with the second profile 20 by removing the at least one degree of freedom.

As illustrated on figures 1 to 6, the first profile 10 may comprise a first junction surface 11, and the second profile 20 may comprise a second junction surface 21. In that case, the assembly step E2 may be implemented by arranging the first profile 10 relative to the second profile 20 by facing the first junction surface 11 with the second junction surface 21. The fixing element 30 may be disposed at the boundary of, and/or between, and/or across the first junction surface 11 and the second junction surface 21 to secure the first profile 10 with the second profile 20 during the fixing step E3. Thus, it is possible to maximize the surface of junction between the first profile 10 and the second profile 20, and the attachment between the first profile 10 and the second profile 20 is improved.

For example, the fixing element 30 may comprises an adhesive agent 31 disposed between the first junction surface 11 and the second junction surface 21 during the fixing step E3. In this way, it is possible to manage dimensional and geometrical tolerances during assembly step E2 while the fixing element 30 is disposed between the first profile 10 and the second profile 20.

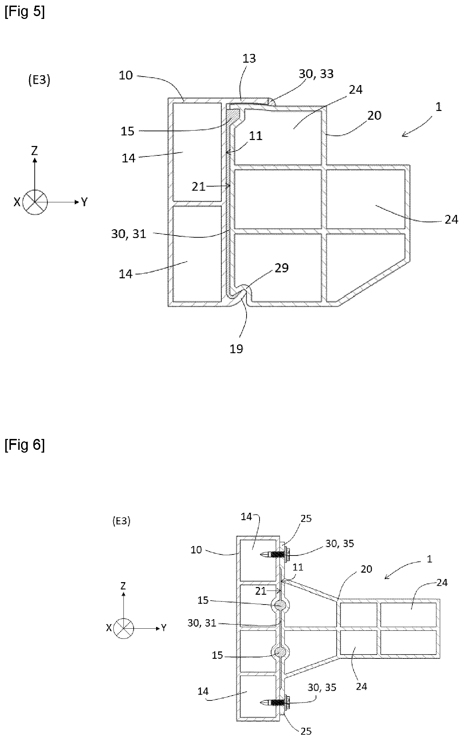

Advantageously, and as illustrated on figure 5 and 6, the first junction surface 11 and the second junction surface 21 can define between them, in the assembly configuration AC, a reservoir 15 intended to receive an adhesive agent 31 as fixing element 30. Thus, it is possible to increase locally the fixing of the first profile 10 with the second profile 20 at the level of the reservoir 15, which is intended to receive the excess of adhesive agent 31. According to the design of the first profile 10 and the second profile 20, the reservoir 15 may be divided in several parts.

Figure 1 to 3 presents a first embodiment in which the first profile 10 comprises two flanges 13 protruding outwardly and defining between them a housing 16. The second profile 20 presents an insertion portion 22 intended to be inserted in said housing 16. According to this embodiment, the assembly step E2 comprises the insertion of the insertion portion 22 of the second profile 20 inside the housing 16, the insertion portion 22 being smaller than the housing 16, therefore creating several degrees of freedom in translations and rotations. In this way, one degree of freedom is a translation of the second profile 20 relative to the first profile 10 along a transversal direction Y defined sensibly perpendicular to the longitudinal direction X. Other degrees of freedom in rotation or translation may be necessary to adjust the position of the second profile 20 relative to the first profile 10. It is thus possible to control the assembly of the first profile 10 with the second profile 20, and to tune the position of the first profile 10 with respect with the second profile 20 by translation and/or rotation.

Figure 4 represents a second embodiment wherein the first profile 10 comprises a flange 13 and an insertion portion 12, and wherein the second profile 20 comprises a flange 23 and an insertion portion 22. The flange 13 and the insertion portion 12 define between them a first housing 16 intended to receive the insertion portion 22, and the flange 23 and the insertion portion 22 define between them a second housing 26 intended to receive the first insertion portion 12. The assembly step E2 is then performed by interlocking the first profile 10 with the second profile 20.

The fixing step E3 may be implemented first by welding the flange 13 with a side wall of the insertion portion 22 with the fixing element 30 which comprises a welding agent 33, and by welding the flange 23 with a side wall of the insertion portion 12 with the fixing element 30 comprising a welding agent 33.

Figure 5 represents a third embodiment wherein the first profile 10 comprises a longitudinal hook 19 extending along the longitudinal direction X, and wherein the second profile 20 comprises a longitudinal groove 29 extending along the longitudinal direction X. According to this embodiment, the assembly step E2 may comprise the insertion of the longitudinal hook 19 in the longitudinal groove 29, so that one degree of freedom is a rotation of the first profile 10 relative to the second profile 20 around the longitudinal direction X. In this way, it is possible to control the assembly of the first profile 10 with the second profile 20, and to tune the position of the first profile 10 with respect with the second profile 20 by rotation.

Besides, the first profile 10 comprises a flange 13 configured to abut on a side wall of the second profile 20.

Finally, the figure 5 shows the presence of a reservoir 15 located between the second junction surface 21 and the first junction surface 11, in the assembly configuration AC.

In this embodiment, the fixing step E3 may be implemented by adding an adhesive agent 31 in the reservoir 15, and between the first junction surface 11 and the second junction surface 21. The fixing step E3 may further comprise the attachment of the flange 13 with the side wall of the second profile 20 by welding with a welding agent 33. It is well understood that the fixing element 30 is formed both by the welding agent 33 and by the adhesive agent 31. Securing of the first profile 10 with the second profile 20 is improved accordingly. The longitudinal hook 19 prevents the adhesive agent 31 from tearing in the event of a crash. If the adhesive starts to tear, it loses mechanical strength.

Figure 6 represents a fourth embodiment wherein the first junction surface 11 and the second junction surface 21 define between them, in the assembly configuration AC, a reservoir 15; and the second profile 20 comprises two lateral side flanges 25 protruding in a plane formed by the longitudinal direction X, and by a vertical direction noted "Z" which is perpendicular to the lateral direction X and to the transversal direction Y.

According to this embodiment, the fixing step E3 comprises securing the first profile 10 with the second profile 20 by inserting an adhesive agent 31 in the reservoir 15 and between the first junction surface 11 and the second junction surface 21; and by bolting the first profile 10 with the lateral side flanges 25 with two screws 35. It is well understood that the fixing element 30 is formed both by the screws 35, and by the adhesive agent 31.

The arrangements described above allows proposing a manufacturing method to produce a structural component 1 for vehicle, and for example a structural component 1 for battery holder or for a sill by using at least two different profiles 10, 20. It allows to manufacture complex structural component 1 while providing more simple extruded profile, and to manage dimensional and geometrical tolerances during assembly step E2.

As indicated before, and as illustrated on figure 2, the invention also concerns a structural component 1 for vehicle comprising a first profile 10 and at least one second profile 20. The first profile 10 and the second profile 20 are arranged and fixedly attached to one another by a fixing element 30 along the longitudinal direction X. The structural component 1 presents a cross section cs1 circumscribed in a circle c1 and a length l1 counted along the longitudinal direction X, a ratio of said length l1 over a diameter D1 of said circle c1 being comprised between 3 and 15. Said structural component may be part of a sill, for example a side sill for a vehicle.

The arrangements described above allows to provide a sill showing improved crash resistance capacity, fulfilling high dimensional requirement, and being able to be produced with reduced cost.

Moreover, the invention may concern a battery holder for electrically or partially electrically propelled vehicle. The battery holder comprises a floor and a frame encircling all or part of the floor and delimiting a housing intended to receive all or part of a battery to be supported by the battery holder. The frame comprises a structural component 1 as described above. The frame generally presents a closed shape encircling the floor, which is defined by a plurality of frame edges meeting two by two at their ends. The plurality of frame edges may comprise at least two longitudinal edges shifted from each other in a lateral direction of the frame counted perpendicular to the direction of travel of the electrically or partially electrically propelled vehicle, said at least two longitudinal edges being constituted by the structural component 1.

Thus, the battery holder protects the sides of the electrically or partially electrically propelled vehicle, which allows to protect the battery from exterior damages or crashes.

The arrangements described above allows to provide a battery holder showing improved crash resistance capacity, fulfilling high dimensional requirement, and being able to be produced with reduced cost.

Finally, the invention concerns a vehicle comprising a battery, and a battery holder and/or a sill as described above.

The arrangements described above allows to provide an electrically or partially electrically propelled vehicle showing improved crash resistance capacity.

## Claims

1. Manufacturing method for producing a structural component (1) for a vehicle, the manufacturing method comprising:
- a providing step (E1) in which a first profile (10) and at least one second profile (20) are provided, the first profile (10) extending along a longitudinal direction (X) and delimiting internally at least two first longitudinal cavities (14) extending along all or part of said first profile (10), the second profile (20) delimiting internally at least two second longitudinal cavities (24) extending along all or part of said second profile (20);
- an assembly step (E2) in which the first profile (10) and the second profile (20) are arranged relative to one another along the longitudinal direction (X) in an assembly configuration (AC) wherein the first profile (10) and the second profile (20) are movable relative to each other according to at least one degree of freedom;
- a fixing step (E3) in which a fixing element (30) secure the first profile (10) with the second profile (20) by removing said at least one degree of freedom, the first profile (10) being fixedly attached to the second profile (20) at the end of the fixing step (E3), thus forming the structural component (1).

2. Manufacturing method according to claim 1, wherein at least one of the first profile (10) or of the second profile (20) is an extruded profile along the longitudinal direction (X).

3. Manufacturing method according to claim 1 or 2, wherein the first profile (10) and the second profile (20) are extruded profiles along the longitudinal direction (X).

4. Manufacturing method according to any one of claims claim 1 to 3, wherein the fixing element (30) is a structural joining method to secure the first profile (10) with the second profile (20).

5. Manufacturing method according to any one of claims 1 to 4, wherein the first profile (10) comprises a first junction surface (11), and the second profile (20) comprises a second junction surface (21), the assembly step (E2) comprising arranging the first profile (10) and the second profile (20) relative to one other, with the first junction surface (11) and the second junction surface (21) facing each other, and wherein the fixing element (30) comprises an adhesive agent (31) disposed between the first junction surface (11) and the second junction surface (21) during the fixing step (E3).

6. Manufacturing method according to claim 5, wherein the first junction surface (11) and the second junction surface (21) define between them, in the assembly configuration (AC), a reservoir (15) intended to receive an excess of adhesive agent (31).

7. Manufacturing method according to any one of claims 1 to 6, wherein the first profile (10) comprises two flanges (13) protruding outwardly and defining between them a housing (16), the assembly step (E2) comprising the insertion of an insertion portion (22) of the second profile (20) inside the housing (16), one of the at least one degree of freedom being a translation of the second profile (20) relative to the first profile (10) along a transversal direction (Y) defined sensibly perpendicular to the longitudinal direction (X).

8. Manufacturing method according to any one of claims 1 to 7, wherein the first profile (10) comprises a longitudinal hook (19) extending along the longitudinal direction (X), and wherein the second profile (20) comprises a longitudinal groove (29) extending along the longitudinal direction (X), the assembly step (E2) comprising the insertion of the longitudinal hook (19) in the longitudinal groove (29), one of the at least one degree of freedom being a rotation of the first profile (10) relative to the second profile (20) around the longitudinal direction (X).

9. Manufacturing method according to any one of claims 1 to 8, wherein the first profile (10) provided in the providing step (E1) and/or the second profile are/is obtained by aluminum or aluminum alloy extrusion.

10. Structural component (1) for vehicle comprising a first profile (10) and at least one second profile (20), the first profile (10) and the second profile (20) being arranged and fixedly attached to one another by a fixing element (30) along the longitudinal direction (X), the structural component (1) presenting a cross section (cs1) circumscribed in a circle (c1) and a length (l1) counted along the longitudinal direction (X), a ratio of said length (l1) over a diameter (D1) of said circle (c1) being comprised between 3 and 20, preferably between 3 and 15.

11. Sill for vehicle, said sill comprising a structural component (1) according to claim 10.

12. Battery holder for electrically or partially electrically propelled vehicle, said battery holder comprising a floor and a frame encircling all or part of the floor and delimiting a housing intended to receive all or part of a battery to be supported by the battery holder, said frame comprising a structural component (1) according to claim 10.

13. Battery holder according to claim 12, wherein the frame presents a closed shape encircling the floor, said closed shape is defined by a plurality of frame edges meeting two by two at their ends, the plurality of frame edges comprising at least two longitudinal edges shifted from each other in a lateral direction of the frame counted perpendicular to the direction of travel of the electrically or partially electrically propelled vehicle, said at least two longitudinal edges being constituted by the structural component (1).
